# EUROPÄISCHE PATENTANMELDUNG

(11) **EP 1 004 644 A2**
(43) Veröffentlichungstag der Anmeldung: **31.05.2000**
(21) Anmeldenummer: 99122201.9
(22) Anmeldetag: 06.11.1999
(51) Int. Cl.: C09D 11/02

(54) **Feste Druckfarben**

(30) Priorität: 25.11.1998 DE 19854423
(71) Anmelder: Cognis Deutschland GmbH, 40589 Düsseldorf (DE)
(72) Erfinder: Cavalli, Dario, 20125 Milano (IT); Vigano, Vittorio, 20040 Zingonia-Verdellino (IT); Di Fiore, Carmine, 80067 Sorrento (IT)

(57) **Zusammenfassung**

Vorgeschlagen werden bei Umgebungstemperatur weitgehend feste, durch Erwärmen schmelzbare Druckfarben, enthaltend Bindemittel und Farbstoffe und/oder Pigmente, die sich dadurch auszeichnen, daß sie einen Gehalt an Polymeren und Wachsen aufweisen.

## Beschreibung

### Gebiet der Erfindung

Die Erfindung befindet sich auf dem Gebiet der Druckfarben und betrifft bei Raumtemperatur feste Zubereitungen.

### Stand der Technik

Um die unterschiedlichsten Arten von Druckerzeugnissen herzustellen, bedient man sich verschiedener Drucktechniken, die sich in vier Hauptdruckarten einteilen lassen: den Hochdruck, den Flachdruck (oder auch Offsetdruck), den Tiefdruck sowie, in neuerer Zeit, den Thermotransferdruck. Beim Hochdruck erfolgt die Übertragung der Druckfarbe von harten, erhabenen Lettern, die durch Gummiwalzen mit einer dünnen Farbschicht bedeckt werden, auf das Substrat. Die Druckfarbe muß so beschaffen sein, daß sie relativ langsam trocknet und nicht vorzeitig auszuhärten beginnt. Für moderne, schnellaufende Zeitungsdruckmaschinen im Rotations-Hochdruckverfahren werden viskose, sehr langsam trocknende Druckfarben benötigt. Beim Offsetdruck wird die abzubildende Gestalt in Form von Zonen gegensätzlicher Polarität auf den Druckplatten fixiert. Die hydrophobe, viskose Druckfarbe benetzt nur die ebenfalls hydrophoben Bereiche auf den Druckplatten. Beim Tiefdruckprozeß wird das Motiv in die Druckplatte eingraviert. Nach dem Benetzen der Druckplatte mit der relativ dünnflüssigen Druckfarbe wird die Oberfläche abgestreift und es verbleibt nur noch Druckfarbe in den eingravierten Vertiefungen, von denen sie dann auf das zu bedruckende Substrat übertragen wird. Beim Thermotransferdruck schließlich wird die in der Regel schmelzbare Druckfarbe zumeist von einem polymeren Trägermaterial durch flächiges oder punktförmiges Erhitzen in geschmolzener Form auf das Substrat aufgebracht.

Die Verwendung flüssiger, lösungsmittelbasierter Druckfarben ist für den Hersteller wie auch für den Anwender mit einer Reihe von gravierenden Nachteilen verbunden. Neben der Explosionsgefahr, der Geruchsbelästigung und der Umweltbelastung haben eine Reihe von zusätzlichen gesetzlichen Umweltauflagen zu steigenden Kosten und zum Teil aufwendigen, technischen Nachrüstungen geführt. Nachteilig bei den konventionellen, lösungsmittelhaltigen Systemen wirkt sich auch die aufwendige Trocknung des bedruckten Materials aus. Die Trocknungssektion beim Rotationstiefdruck beispielsweise besteht aus einer Anordnung von einer Vielzahl von parallel zum Bedruckstoff verlaufenden Rohren mit Düsenanordnungen, durch die erwärmte Luft gegen den durchlaufenden Bedruckstoff geblasen wird. Die für eine hohe Effizienz des Wärme- und Massendurchgangs durch die Strömungsschicht nötige Turbulenz des Prallstrahls muß durch hohe Gebläseleistungen erreicht werden. Entsprechend große Gebläse saugen hierbei Luft aus der Umgebung an, die aktiv, d.h. in Wärmetauschern gegebenenfalls bis auf 80°C oder passiv, d.h. durch den Strömungswiderstand, bis auf ca. 40°C erwärmt wird. Mit zunehmender Druckgeschwindigkeit, d.h. mit zunehmendem Durchsatz steigt auch der für den Verdampfungsprozeß erforderliche Energieaufwand stark an, was sowohl auf die höhere thermische Leistung im Luftstrom als auch auf eine höhere Gebläseleistung zurückzuführen ist. Die Trocknungsluft stellt beispielsweise beim Tiefdruck den größten Massestrom aller die Maschine durchlaufenden Materialien dar.

Neben dem hohen, für die Trocknung der lösemittelhaltigen Druckfarben benötigten Energieaufwand, ist der Raumbedarf für derartige Anlagen immens hoch. Die zur Realisierung der Drucktechnologie benötigten Anlagenteile sind dabei im Vergleich zum Raumanteil der Trocknungssektion klein. Bei einer Steigerung der Druckgeschwindigkeit nimmt die zur Trocknung zur Verfügung stehende Strecke proportional ab, so daß bei gleichbleibend guter Druckqualität die Trocknungsstrecke verlängert werden muß, was einerseits neue, aufwendige Baumaßnahmen erfordert und andererseits die Anlage weiter vergrößert.

Als dritter Punkt, der sich bei der Verwendung flüssiger, lösungsmittelbasierter Druckfarben nachteilig auswirkt, muß noch die aufwendige Abluftbehandlung erwähnt werden, die beachtliche Betriebskosten verursacht. Sowohl die Rückgewinnung des Lösungsmittels aus der Abluft als auch eine thermische Nachverbrennung verursachen nicht unbeträchtliche Kosten.

Besonders die Umweltauflagen und die zunehmende Größe der Trocknungsanlagen haben in den vergangenen Jahren zu Anstrengungen geführt, die Druckfarben ganz, oder zumindest teilweise von Lösungsmitteln, insbesondere denjenigen, die auf Mineralölbasis gewonnen wurden, zu befreien. Zu diesen Ansätzen gehören beispielsweise die lösungsmittelfreien Druckfarben, die z.B. aus einem Melamin- einem Polyesterharz und einem blockierten Katalysator aufgebaut sind. Solche Bindemittelgemische müssen jedoch bei höherer Temperatur ausgehärtet werden. Bei weiterführenden Ansätzen ging man von UV- oder elektronenstrahlhärtbaren Mono- oder Oligomeren aus, die nach dem Aufbringen auf das Substrat vernetzt, und damit ausgehärtet werden konnten. Problematisch war bei dieser Vorgehensweise die Steuerung und Kontrolle der hohen Energiemengen sowie der Einfluß der in der Druckfarbe suspendierten Pigmente. Unter dem Begriff Druckfarbe werden hierbei sowohl verdruckbare Körner mit tatsächlicher Farbänderung, als auch verdruckbare nicht farbige Klarlacke und nicht farbgebende Druckfarbenverschnitte verstanden. Eine Lösung bietet die Verwendung von Druckfarben, deren Lösungsmittel bei Umgebungstemperatur fest sind. Durch Anwendung von Wärme wird die Farbe in einen flüssigen Zustand geeigneter Viskosität überführt und das Druckverfahren auf übliche Weise durchgeführt. Bei solchen Druckfarben muß sowohl das Farbversorgungssystem als auch die Druckwalze beheizt werden, um einen gleichmäßig guten Farbauftrag zu ermöglichen. Anstatt der üblichen heißen Trocknungswalzen und einem oder mehrerer Heißluftgebläse schließt sich dem Farbauftrag eine gekühlte Walze und ein Luftgebläse mit Kaltluft an, um die geschmolzene Druckfarbe schnell und ohne Verlaufen der Konturen zum Aushärten zu bringen.

So beschreibt beispielsweise die **DE 4205636 C2** Tief- und Flachdruckverfahren, bei denen schmelzbare Druckfarben von beheizten Tiefdruckzylindern oder gegebenenfalls mittels Laser verflüssigt appliziert wird. Als schmelzbares Lösungsmittel nennt die Druckschrift lediglich Cetylalkohol und/oder Stearylalkohol. Die **DE 3625592 C2** beschreibt Druckverfahren, bei denen als Druckfarbe ein schmelzbares, zur Ausbildung einer unterkühlten Schmelze befähigtes Bindemittel gegebenenfalls in Abmischung mit niedermolekularen Aminen dient. Die **DE 2635226 C2** lehrt ebenfalls die Verwendung schmelzbarer Druckfarben im Tief- und Flexodruck. Als Schmelzen dienen auch hier Bindemittel auf Polyamid- oder Polyesterpolyamidharzbasis, gegebenenfalls in Abmischung mit niedermolekularen Aminen, wie beispielsweise cycloaliphatischen Diaminen und Etherdiaminen.

Die komplexe Aufgabe der vorliegenden Erfindung hat demnach darin bestanden, feste Druckfarben zur Verfügung zu stellen, die sich bei niedrigen Herstellungskosten gleichzeitig durch eine hohe chemische Stabilität gegen atmosphärische Einflüsse, Abwesenheit von Lösungsmitteln, Minimierung von flüchtigen Bestandteilen, hohe Verträglichkeit mit Antistatika, Gleitmitteln, Antifoggingmitteln und dergleichen sowie Beständigkeit gegen Säuren und Basen auszeichnen sollten.

### Beschreibung der Erfindung

Gegenstand der Erfindung sind bei Umgebungstemperatur weitgehend feste, durch Erwärmen schmelzbare Druckfarben, enthaltend Bindemittel und Farbstoffe und/oder Pigmente, die sich dadurch auszeichnen, daß sie einen Gehalt an Kohlenwasserstoffharzen und Polyolefinwachsen aufweisen.

Überraschenderweise wurde gefunden, daß die erfindungsgemäßen Zubereitungen das eingangs geschilderte komplexe Anforderungsprofil vollständig erfüllen. Darüber hinaus weisen sie den Vorteil einer verbesserten Haftung an den Druckwalzen auf, so daß ein besonders sauberer Druck möglich wird. Eine Vorbehandlung der Druckwalzen ist daher nicht erforderlich, ebenso wird bei Verwendung der erfindungsgemäßen festen Druckfarben die Feuergefahr deutlich herabgesetzt.

Als Umgebungstemperatur im Sinne der Erfindung verstehen sich Temperaturen, wie sie im Arbeitsumfeld bei der Verwendung von Druckfarben üblicherweise herrschen, also etwa Temperaturen zwischen 0 und 50°C, wobei Temperaturen zwischen 15 und 40 °C in der Regel am häufigsten sind. Unter weitgehend fest wird im Sinne der Erfindung ein Zustand verstanden, in dem die Druckfarbe unter einem geeigneten äußeren Einfluß, wie beispielsweise Schrägstellen des Behälters in dem die Druckfarbe gelagert ist, nicht wahrnehmbar fließfähig ist.

### Kohlenwasserstoffharze

Typische Beispiele für geeignete thermoplastische Kohlenwasserstoffharze sind Kolophonium, Kolophoniumester, Polyvinylchlorid (PVC), Alkydharze, Phenolharze sowie Polyamid- und Polyesteramidharze, wie sie beispielsweise in der **DE 2635226 C2** explizit beschrieben werden. Das Gewichtsverhältnis zwischen den Kohlenwasserstoffharzen und den Polyolefinwachsen kann 10 : 90 bis 90 : 10, vorzugsweise 75 : 25 bis 25 : 75 und insbesondere 60 : 40 bis 40 : 60 betragen.

### Polyolefinwachse

Unter Polyolefinwachsen sind überwiegend lineare (and/or branching) Polyolefine mit wachsartigem Charakter zu verstehen. Technische Bedeutung haben Polypropylen- und insbesondere Polyethylenwachse, bei denen es sich um Produkte mit relativ niedrigen Molmassen im Bereich von 500 bis 20.000 handelt. Die Herstellung der Polyolefinwachse erfolgt in der Regel durch direkte Hoch- oder Niederdruckpolymerisation der Monomere oder durch gezielte Depolymerisation von Produkten höherer Molmassen. Modifizierte Polyolefinwachse können durch Copolymerisation von Ethylen mit geeigneten anderen Monomeren wie beispielsweise Vinylacetat oder Acrylsäure oder aber nach dem Fischer-Tropsch-Verfahren hergestellt werden. (Schließlich ist es möglich, die Dispergierbarkeit von Polyolefinen durch oxidative Oberflächenbehandlung zu verbessern. Übersichten zu diesem Thema finden sich beispielsweise in **Ullmann's Enzyklopaedie der technischen Chemie (4.Aufl.), 24, 36 sowie Enzcycl.Polym.Sci.Engng. 17, 792f**. Im Sinne des erfindungsgemäßen Verfahrens ist der Einsatz von high-density Polyethylenwachs mit einem mittleren Molekulargewicht im Bereich von 500 bis 10.000 und insbesondere 2.000 bis 5.000 bevorzugt. Vorzugsweise werden kationische bzw. pseudokationische Polyethylenwachse eingesetzt. Üblicherweise gelangen die Polyolefinwachse in Form von Perlen, Chips, Granulaten, Pulvern und dergleichen in den Handel.

### Verarbeitung der Druckfarben

Die Verarbeitung der Druckfarben sollte in einem Temperaturbereich stattfinden, in dem die Druckfarbe optimale rheologische Eigenschaften aufweist. In der Regel sind dies Verarbeitungstemperaturen von mindestens 50 bis 200°C, wobei die Obergrenze durch die thermische Stabilität der eingesetzten Bindemittel, der weiteren Inhaltsstoffe und des Substrates sowie den technischen Einzelheiten der Druckmaschine bestimmt wird. Üblicherweise sind Temperaturen von 100 bis 180 °C, insbesondere von etwa 130 bis 170 °C die optimalen Verarbeitungstemperaturen für die erfindungsgemäßen Druckfarben. Das Abbinden der erfindungsgemäßen Druckfarben kann in an sich bekannter Weise auf chemischem oder physikalischem Wege geschehen, wobei die vorgesehene Anwendung des Druckerzeugnisses in der Regel dem Fachmann die erforderliche Variante vorgibt. So können in den erfindungsgemäßen Druckfarben ebenso Bindemittel eingesetzt werden, die aufgrund des Lösungsmittelentzugs, beispielsweise durch einen saugenden Untergrund, koagulieren, wie auch Bindemittel, die aufgrund äußerer Einflüsse wie beispielsweise elektromagnetischer Strahlung direkt oder indirekt über Katalysatoren in einer chemischen Reaktion vernetzend abbinden. Die Anwendung der Druckfarben erfolgt in der Regel über vorgewärmte Silicongummi-Chlichés und Stahlwalzen.

### Weitere Hilfs- und Zusatzstoffe

Die erfindungsgemäßen Druckfarben können weitere **Bindemittel** enthalten, die Substrathaftung und Klebrigkeit vorteilhaft verbessern. Hierfür kommen beispielsweise Kohlenwasserstoffe, insbesondere Paraffinöle, Polyester-Polyamid-Copolymere, Polyurethane, Polyepoxide sowie bevorzugt Polyethylene, Polypropylene, Polyamide, Polyacrylate und Polystyrol in Frage. Als besonders vorteilhaft hat sich in diesem Zusammenhang der Einsatz von Ethylen-Vinylacetat-Copolymeren erwiesen.

Die erfindungsgemäße Druckfarbe kann als Additive sogenannte **Füllstoffe** enthalten, die in der Regel viskositätserhöhend wirken, ohne die Klebrigkeit zu beeinflussen. Hierzu gehören anorganische und/oder organische Salze, insbesondere Aluminiumhydrat, Calciumcarbonat, Silicagel, Bentonite, Bariumsulfat und dergleichen in unterschiedlichsten Formulierungen. Der Füllstoffanteil an der Druckfarbe kann bis zu 50 Gew.-% betragen.

Weiterhin können in der Druckfarbe solche **Additive** enthalten sein, welche auf spezifische Eigenschaften des zu bedruckenden Untergrundes abgestimmt sind. So sind beispielsweise Zusätze zur Veränderung der Gleit- oder Hafteigenschaften auf dem Untergrund und zur Verbesserung der Benetzung des Untergrundes im erfindungsgemäßen Sinne einsetzbar. In einer bevorzugten Ausführungsform der Erfindung gelangen Druckfarben zum Einsatz, enthaltend
(a) 50 bis 95, vorzugsweise 60 bis 70 Gew.-% Kohlenwasserstoffharze und Polyolefinwachse,
(b) 0 bis 20, vorzugsweise 10 bis 15 Gew.-% Ethylen-Vinylacetat-Copolymere,
(c) 0 bis 20, vorzugsweise 5 bis 10 Gew.-% Polyolester,
(d) 5 bis 25, vorzugsweise 15 bis 20 Gew.-% Farbstoffe und/oder Pigmente sowie
(e) 0 bis 10, vorzugsweise 2 bis 8 Gew.-% Paraffinöl,
mit der Maßgabe, daß sich die Mengenangaben zu 100 Gew.-% ergänzen.

Die Druckfarben können im Sinne der Erfindung entweder durch Verkneten oder Vermahlen der Einzelkomponenten im festen Zustand hergestellt werden oder durch Vermischen, Lösen bzw. Dispergieren der einzelnen Komponenten im geschmolzenen Lösungsmittelgemisch bei erhöhter Temperatur. Die fertige, erkaltete Druckfarbe kann in Form von Perlen, Chips, Granulaten, Blöcken, Schuppen, Pulvern oder dergleichen durch gießen, hobeln, mahlen oder eine ähnliche Behandlung konfektioniert werden.

### Beispiele

Die Druckfarben gemäß Beispiel 1 und 2 dienen zum Bedrucken von Papier, Beispiel 3 gibt eine Druckfarbe für das Bedrucken von Plastik wieder.

**Tabelle 1**

| **Zusammensetzung der Druckfarben** | | | |
|---|---|---|---|
| **Zusammensetzung** | **1** | **2** | **3** |
| **Sepamelt® 87B** | 70,0 | - | - |
| Ethylen-Vinylacetat-Copolymer (+) Kohlenwasserstoffharz (+) Pentaerythrolester (+) Polyethylenwachs | | | |
| **Sepamelt® 95B** | - | 15,0 | - |
| Ethylen-Vinylacetat-Copolymer (+) Kohlenwasserstoftharz (+) Polylethylenwachs | | | |
| **Sasolwachs® H1** | 10,0 | - | 5,0 |
| Fischer-Tropsch-Wachs | | | |
| **Escorez® 5350** | 4,0 | 70,0 | - |
| Kohlenwasserstoffharz | | | |
| **Arkon® 100** | - | - | 47,0 |
| Kohlenwasserstoffharz | | | |
| **Super® 100** | 16,0 | 15,0 | 14,0 |
| Druckerschwärze | | | |
| **PP Hüls 408** | - | - | 27,0 |
| Polypropylen | | | |
| **Primol® 352** | **-** | - | 7,0 |
| Paraffinöl | | | |

## Patentansprüche

1. Bei Umgebungstemperatur weitgehend feste, durch Erwärmen schmelzbare Druckfarben, enthaltend Bindemittel und Farbstoffe und/oder Pigmente, **dadurch gekennzeichnet,** daß sie einen Gehalt an Kohlenwasserstoffharzen und Polyolefinwachsen aufweisen.

2. Druckfarben nach Anspruch 1, **dadurch gekennzeichnet,** daß sie weiterhin Ethylen-Vinylacetat-Copolymere enthalten.

3. Druckfarben nach den Ansprüchen 1 und/oder 2, **dadurch gekennzeichnet,** daß sie weiterhin Polyolester enthalten.

4. Druckfarben nach mindestens einem der Ansprüche 1 bis 3, **dadurch gekennzeichnet,** daß sie weiterhin Paraffinöl enthalten.

5. Druckfarben nach mindestens einem der Ansprüche 1 bis 4, **dadurch gekennzeichnet,** daß sie
(a) 50 bis 95 Gew.-% Kohlenwasserstoffharze und Polyolefinwachse,
(b) 0 bis 20 Gew.-% Ethylen-Vinylacetat-Copolymere,
(c) 0 bis 20 Gew.-% Polyolester,
(d) 5 bis 25 Gew.-% Farbstoffe und/oder Pigmente sowie
(e) 0 bis 10 Gew.-% Paraffinöl,
mit der Maßgabe, daß sich die Mengenangaben zu 100 Gew.-% ergänzen.
